# EUROPEAN PATENT SPECIFICATION

(11) **EP 4 287 378 B1**
(45) Date of publication and mention of the grant of the patent: **31.12.2025**
(21) Application number: 22904515.8
(22) Date of filing: 17.11.2022
(51) Int. Cl.: H01M 50/249, H01M 50/271, H01M 50/264, H01M 50/262, H01M 50/244, H01M 50/24, H01M 50/204, H01M 50/209

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 07.12.2021 KR 20210174141
(43) Date of publication of application: 06.12.2023
(73) Proprietor: LG Energy Solution, Ltd., Seoul 07335 (KR)
(72) Inventor: KIM, Young-Jin, Daejeon 34122 (KR); SHIN, Yong-Shik, Daejeon 34122 (KR); SON, Do-Wung, Daejeon 34122 (KR); YUN, Seung-Hyun, Daejeon 34122 (KR); JUNG, Byeong-Yoon, Daejeon 34122 (KR); CHOI, Sung-Man, Daejeon 34122 (KR)
(74) Representative: Plasseraud IP
(86) International application number: PCT/KR2022/018237
(87) International publication number: WO 2023/106682

(56) References cited:
- CN-U- 201 812 868
- KR-A- 20160 019 698
- KR-A- 20170 065 832
- KR-A- 20170 098 583
- KR-A- 20200 111 352
- KR-B1- 101 725 908
- KR-B1- 101 730 959
- KR-B1- 101 902 445

## Description

### TECHNICAL FIELD

The present disclosure relates to a battery pack and a vehicle including the same, and more particularly, to a battery pack with improved sealing performance of a sealing gasket and a vehicle including the same.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack is general.

The conventional battery pack generally includes at least one battery module including at least one battery cell, and a case tray and a case cover for accommodating the at least one battery module. In addition, in the conventional battery pack, a sealing gasket is mounted between the case cover and the case tray for sealing the battery pack.

In the battery pack, in order to secure sealing performance, a large surface pressure must be derived from the sealing gasket. In order to obtain such a large surface pressure, it is necessary to firmly fix the case cover and the case tray without twisting when mounting the sealing gasket.

However, in the case of a conventional battery pack, when bolting for coupling the case cover and the case tray, twisting of the case cover frequently occurs near the position where the sealing gasket is placed, and it is difficult to secure the surface pressure in the sealing gasket, resulting in poor sealing performance.

Therefore, when the case cover and the case tray are combined, a method to provide a battery pack that can improve the sealing performance of the sealing gasket by preventing twisting of the case cover near the mounting position of the sealing gasket, and a vehicle including the same is requested.

Document KR 101902445 B1 discloses a battery pack with means for preventing permeation of moisture, according to the preamble of claim 1.

### DISCLOSURE

### Technical Problem

The present disclosure is directed to providing a battery pack capable of improving sealing performance of a sealing gasket by preventing twisting of a case cover, and a vehicle including the same.

In addition, the present disclosure is directed to providing a battery pack that can effectively protect the battery module in the case cover by preventing direct penetration of moisture, foreign substance, direct sunlight, etc. into the case cover, and a vehicle including the same.

### Technical Solution

To this end, the invention relates to a battery pack according to claim 1.

The battery pack after the invention may present one or more features from the dependent claims 2 to 9, in any combination allowed by the claims.

The invention also relates to a vehicle according to claim 10.

### Advantageous Effects

According to various embodiments as described above, it is possible to provide a battery pack capable of improving sealing performance of a sealing gasket by preventing twisting of a case cover, and a vehicle including the same.

In addition, according to various embodiments as described above, it is possible to provide a battery pack that can effectively protect the battery module in the case cover by preventing direct penetration of moisture, foreign substance, direct sunlight, etc. into the case cover, and a vehicle including the same.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery pack according to an embodiment of the present disclosure.
FIG. 2 is an exploded perspective view of the battery pack of FIG. 1.
FIG. 3 is a perspective view of a case cover of the battery pack of FIG. 2.
FIG. 4 is a view for explaining a reinforcing unit mounted on an inner surface of the case cover of FIG. 3.
FIG. 5 is a perspective view of the reinforcing unit of FIG. 4.
FIG. 6 is a view for explaining a sealing gasket of the battery pack of FIG. 2.
FIG. 7 is an enlarged view of a main part of the sealing gasket of FIG. 6.
FIG. 8 is a view for explaining the mounting state of the sealing gasket to the case cover of FIG. 3.
FIG. 9 is an enlarged view of a main part of FIG. 8.
FIG. 10 is a view for explaining the combination of the case tray and case cover of the battery pack of FIG. 2.
FIG. 11 is a cross-sectional view of a second reinforcing plate of the reinforcing unit of FIG. 4.
FIG. 12 is a view for explaining a second reinforcing plate according to another embodiment of the present disclosure.
FIG. 13 is a view for explaining a structure for preventing direct penetration of moisture or foreign substance through a reinforcing patch of the second reinforcing plate of FIG. 11.
FIG. 14 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that modifications could be made thereto without departing from the scope of the appended claims.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

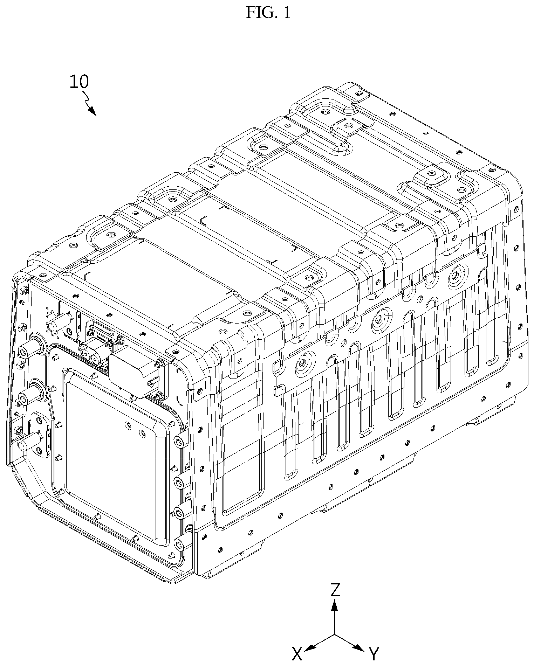

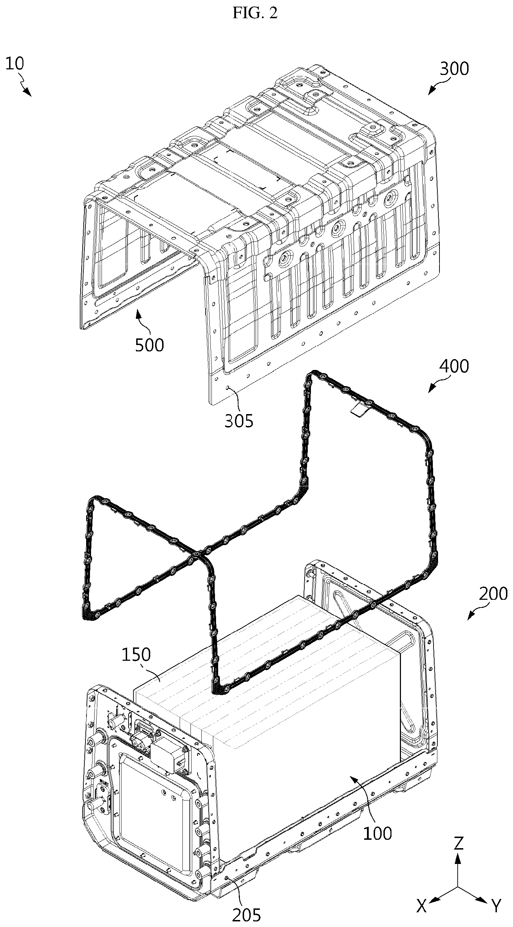

FIG. 1 is a view for describing a battery pack according to an embodiment of the present disclosure, and FIG. 2 is an exploded perspective view of the battery pack of FIG. 1.

Referring to FIGS. 1 and 2, a battery pack 10 includes a battery module 100, a case tray 200, a case cover 300, a sealing gasket 400, and a reinforcing unit 500.

The battery module 100 may be provided in at least one or in plurality. The battery module 100 includes at least one or a plurality of battery cells 150. Hereinafter, in this embodiment, the battery module 100 will be described as including a plurality of battery cells 150.

The plurality of battery cells 150 are secondary batteries, and may be provided as pouch-type secondary batteries, prismatic secondary batteries, or cylindrical secondary batteries. Hereinafter, in this embodiment, the plurality of battery cells 150 will be described as being provided as pouch-type secondary batteries.

The case tray 200 supports the at least one battery module 100. The case tray 200 may be mounted on a machine or device using the battery pack 10 as an energy source.

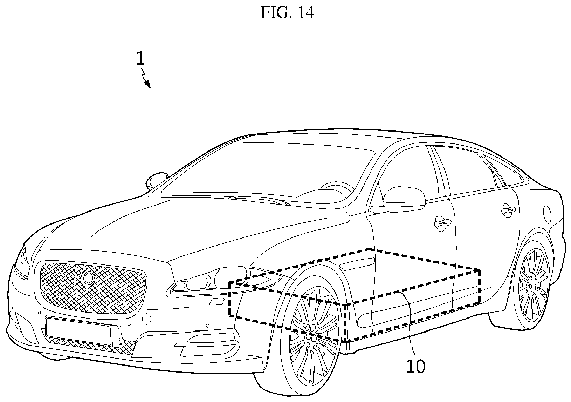

As an example, the case tray 200 may be mounted to a vehicle (1, see FIG. 14) such as an electric vehicle. A plurality of tray fastening holes 205 for coupling with a case cover 300 described below may be provided at an edge of the case tray 200.

The case cover 300 is coupled with the case tray 200 to cover the at least one battery module 100. A plurality of cover fastening holes 305 for coupling with the case tray 200 may be provided at an edge of the case cover 300.

The sealing gasket 400 is for sealing the battery pack 10 and is disposed between the case tray 200 and the case cover 300 to prevent penetration of moisture or foreign substances into the at least one battery module 100.

The reinforcing unit 500 is provided to the case cover 300 to be disposed close to the sealing gasket 400. Specifically, the reinforcing unit 500 is provided near the inner edge of the case cover 300, and may be disposed close to the sealing gasket 400 on the inner surface of the case cover 300.

The reinforcing unit 500 is configured to prevent twisting of the case cover 300 when the case tray 200 and the case cover 300 are coupled. When the case tray 200 and the case cover 300 are coupled, twisting of the case cover 300 may occur due to the sealing gasket 400 near the case cover 300 where the sealing gasket 400 is disposed.

In this embodiment, when the case tray 200 and the case cover 300 are coupled, twisting of the case cover 300 due to the sealing gasket 400 may be effectively prevented through the reinforcing unit 500 disposed close to the sealing gasket 400.

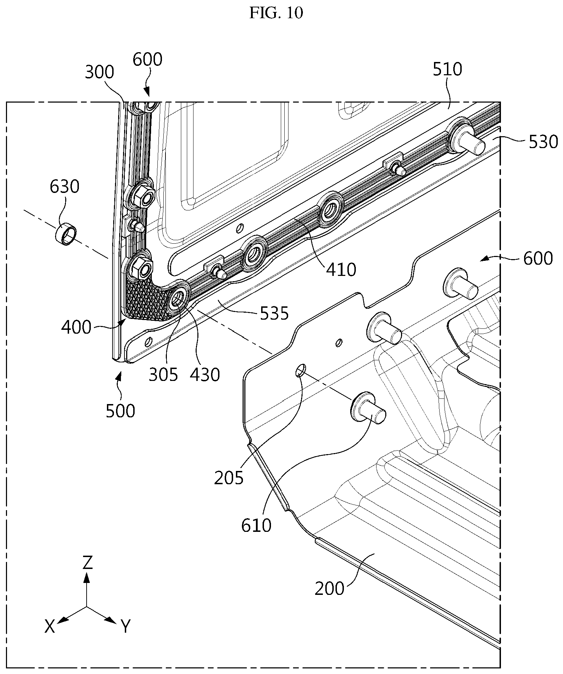

Specifically, the case tray 200 and the case cover 300 may be coupled to each other through a fastening unit (600, see FIG. 10). The fastening unit 600 may pass through the sealing gasket 400 when the case tray 200 and the case cover 300 are coupled. Here, the reinforcing unit 500 is disposed oppositely with the fastening unit 600 interposed therebetween.

In this embodiment, since the reinforcing unit 500 is disposed oppositely with the fastening unit (600, see FIG. 10) passing through the sealing gasket 400 interposed therebetween when the case tray 200 and the case cover 300 are coupled, twisting of the case cover 300 near the disposed position of the sealing gasket 400 during pressurization by bolting or the like of the fastening unit (600, see FIG. 10) may be effectively prevented.

The reinforcing unit 500 is disposed oppositely with the sealing gasket 400 being interposed therebetween on the inner side of the case cover 300. Accordingly, when the fastening unit (600, see FIG. 10) is pressed due to fastening or the like, displacement or the like of the sealing gasket 400 may be effectively prevented.

Hereinafter, the reinforcing unit 500 according to this embodiment will be described in more detail.

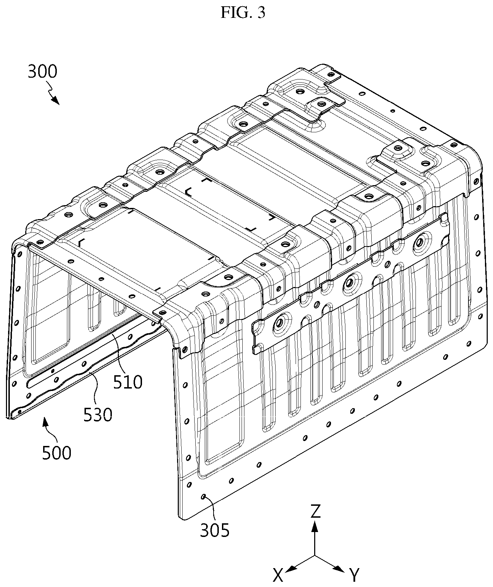

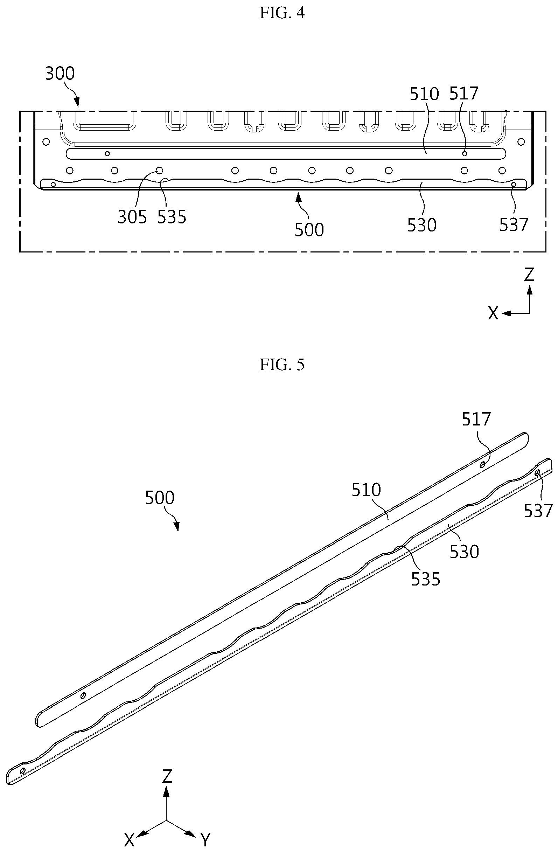

FIG. 3 is a perspective view of a case cover of the battery pack of FIG. 2, FIG. 4 is a view for explaining a reinforcing unit mounted on an inner surface of the case cover of FIG. 3, and FIG. 5 is a perspective view of the reinforcing unit of FIG. 4.

Referring to FIGS. 3 to 5 and FIGS. 1 and 2 above, the reinforcing unit 500 may have a thickness (Y-axis direction) corresponding to the thickness (Y-axis direction) of the sealing gasket 400.

Specifically, the reinforcing unit 500 may be provided not thicker than the thickness (Y-axis direction) of the sealing gasket 400 in order to minimize the occurrence of empty space inside the battery pack 10 according to the thickness (Y-axis direction) of the reinforcing unit 500.

The reinforcing unit 500 may be provided as a pair and provided on both sides (Y-axis direction) of the inner surface of the case cover 300, respectively. Each reinforcing unit 500 includes a first reinforcing plate 510 and a second reinforcing plate 530.

The first reinforcing plate 510 is provided on the inner surface of the case cover 300. Specifically, the first reinforcing plate 510 may be provided in the shape of a long plate having a predetermined length.

The first reinforcing plate 510 may be mounted on the inner surface of the case cover 300 along the longitudinal direction (X-axis direction) of the case cover 300 at the inner bottom of the case cover 300.

In the first reinforcing plate 510, a fixing portion 517 for coupling with the case cover 300 may be formed at both end sides in the longitudinal direction (X-axis direction). A bolting member or the like for coupling the first reinforcing plate 510 and the case cover 300 may pass through or be fastened through the fixing portion 517.

The second reinforcing plate 530 is provided on the inner surface of the case cover 300 to be spaced apart from the first reinforcing plate 510 by a predetermined distance. Specifically, like the first reinforcing plate 510, the second reinforcing plate 530 may be provided in a long plate shape with a predetermined length, and may be provided with a longer length than the first reinforcing plate 510.

The second reinforcing plate 530 may be mounted on the inner surface of the case cover 300 along the longitudinal direction (X-axis direction) of the case cover 300 at the inner bottom of the case cover 300.

Specifically, the second reinforcing plate 530 may be disposed on the lower side (-Z-axis direction) of the case cover 300 to be spaced apart from the first reinforcing plate 510 by a predetermined distance in the vertical direction (Z-axis direction) of the case cover 300.

The sealing gasket 400 is disposed between the first reinforcing plate 510 and the second reinforcing plate 530. In addition, the plurality of fastening holes 305 of the case cover 300 may be disposed between the first reinforcing plate 510 and the second reinforcing plate 530.

As described above, the first reinforcing plate 510 and the second reinforcing plate 530 may be disposed between the plurality of fastening holes 305 and the sealing gasket 400 covering the plurality of fastening holes 305 at the bottom edge of the inner surface of the case cover 300 to reinforce the rigidity near the bottom edge of the inner surface of the case cover 300 along the longitudinal direction (X-axis direction) of the case cover 300.

Hereinafter, the sealing gasket 400 disposed between the first reinforcing plate 510 and the second reinforcing plate 530 will be described in more detail.

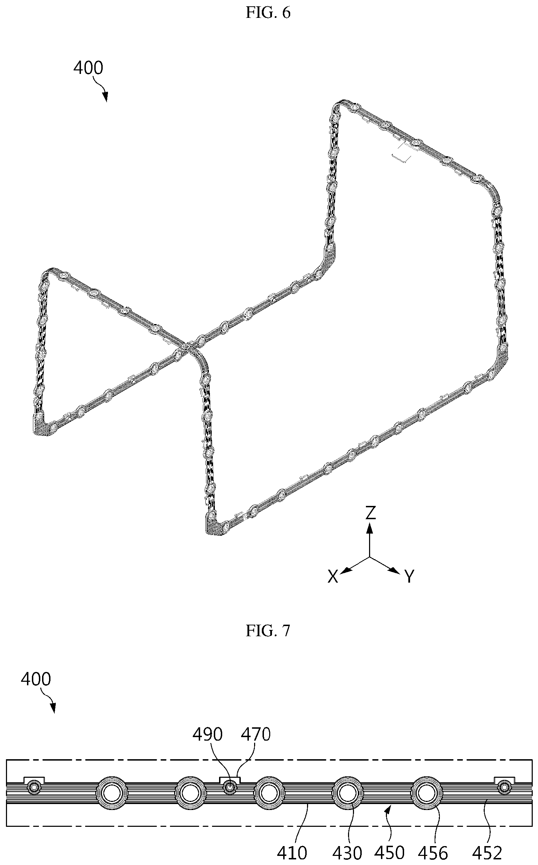

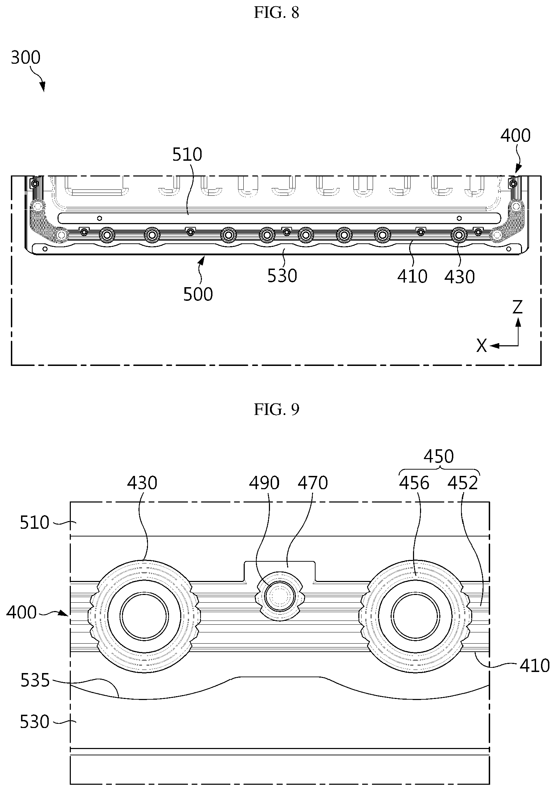

FIG. 6 is a view for explaining a sealing gasket of the battery pack of FIG. 2, FIG. 7 is an enlarged view of a main part of the sealing gasket of FIG. 6, FIG. 8 is a view for explaining the mounting state of the sealing gasket to the case cover of FIG. 3, and FIG. 9 is an enlarged view of a main part of FIG. 8.

Referring to FIGS. 6 to 9 and FIGS. 1 to 5 above, the sealing gasket 400 may include a gasket band 410 and a plurality of fastening portions 430.

When the case tray 200 and the case cover 300 are coupled, the gasket band 410 may be disposed between the first reinforcing plate 510 and the second reinforcing plate 530.

The gasket band 410 may be formed to correspond to the shape of the edge of the case tray 200 and the edge of the case cover 300. The gasket band 410 may have a predetermined length and may be made of a rubber material or the like.

The plurality of fastening portions 430 are formed on the gasket band 410, and the fastening unit 600 for coupling the case tray 200 and the case cover 300 may pass therethrough.

The plurality of fastening portions 430 may be disposed at locations corresponding to the plurality of cover fastening holes 305 of the case cover 300 to guide fastening through the fastening unit 600 when the sealing gasket 400 is mounted to the case cover 300.

The plurality of fastening portions 430 may be formed to protrude beyond the gasket band 410 in the width direction of the gasket band 410 so as to more easily guide fastening of the fastening unit 600.

Also, the second reinforcing plate 530 may include a plurality of concave portions 535 to prevent interference with the plurality of fastening portions 430. The plurality of concave portions 535 are formed on the upper side (+Z-axis direction) of the second reinforcing plate 530, and may be integrally formed with the second reinforcing plate 530.

When the sealing gasket 400 is disposed, the plurality of concave portions 535 may be disposed on the lower side (-Z-axis direction) of the plurality of fastening portions 430 of the sealing gasket 400. The plurality of concave portions 535 may be disposed opposite to each other to be spaced apart from the plurality of fastening portions 430 by a predetermined distance.

Meanwhile, the sealing gasket 400 may include an elastic bead 450, a position guider 470, and a guide bead 490.

The elastic bead 450 is to further improve the sealing performance of the sealing gasket 400, and may be formed on the outer circumference of the gasket band 410. The elastic bead 450 may be elastically deformable while being pressed by the case tray 200 and the case cover 300 when the case tray 200 and the case cover 300 are coupled.

The elastic bead 450 may include a band bead 452 and a fastening bead 456.

The band bead 452 may be formed on the outer circumference of the gasket band 410. The band bead 452 may be formed long along the longitudinal direction of the gasket band 410.

The fastening bead 456 may be provided in plurality. The plurality of fastening beads 456 may be formed on the outer circumference of the plurality of fastening portions 430. The plurality of fastening beads 456 may have a shape corresponding to that of the plurality of fastening portions 430.

The position guider 470 may guide mounting of the sealing gasket 400 in a proper position when the sealing gasket 400 is mounted. The position guider 470 is provided between the plurality of fastening portions 430 and may protrude from the gasket band 410 in a direction perpendicular to the longitudinal direction of the gasket band 410 by a predetermined length.

The position guider 470 may have a protruding length at least equal to that of the plurality of fastening portions 430. The protruding length of the position guider 470 may be a preset protruding length for the proper positioning of the sealing gasket 400. The predetermined protruding length may be at least equal to the protruding length of the plurality of fastening portions 430.

The position guider 470 may be disposed to be spaced apart from the band bead 452 so as not to interfere with the band bead 452.

The position guider 470 may be provided in plurality.

At least one of the plurality of position guiders 470 may be provided between the plurality of fastening portions 430. The plurality of position guiders 470 may be spaced apart from each other by a predetermined distance along the longitudinal direction of the gasket band 410.

Through the plurality of position guiders 470, when the sealing gasket 400 is disposed between the case tray 200 and the case cover 300, a manufacturer or the like may visually checks the position of the plurality of position guiders 470 easily and quickly figure out whether the plurality of position guiders 470 are disposed at correct positions.

The guide bead 490 is provided on the gasket band 410 and may be provided at a position close to the position guider 470. The guide bead 490 may have a substantially circular shape.

The guide bead 490 may further improve the sealing performance of the sealing gasket 400 together with the elastic bead 450. When the case tray 200 and the case cover 300 are coupled, the guide bead 490 may be elastically deformable together with the elastic bead 450 while being pressed by the case tray 200 and the case cover 300.

FIG. 10 is a view for explaining the combination of the case tray and case cover of the battery pack of FIG. 2.

Referring to FIG. 10, during the manufacturing process of the battery pack 10, the manufacturer or the like may place the battery module (100, see FIG. 2) in the case tray 200 and then couple the case tray 200 and the case cover 300 to each other through the fastening unit 600.

Here, for sealing the battery pack 10, the manufacturer or the like may place the sealing gasket 400 on the edge of the case tray 200 and the edge of the case cover 300, and fasten the case cover 300, the sealing gasket 400 and the case tray 200 integrally by penetrating them by the fastening unit 600.

The fastening unit 600 may be provided in plurality. The plurality of fastening units 600 may include a fastening boss 610 and a fastening nut 630.

The fastening boss 610 may have a cylindrical shape having a thread therein. The fastening boss 610 may penetrate the tray fastening hole 205 of the case tray 200 or cover the tray fastening hole 205 on the inner side of the case tray 200.

The fastening nut 630 is screwed to the fastening boss 610, and may penetrate the cover fastening hole 305 of the case cover 300 or cover the cover fastening hole 305 on the outer side of the case cover 300.

**In** this embodiment, the fastening boss 610 may penetrate in the order of the tray fastening hole 205 of the case tray 200, the fastening portion 430 of the sealing gasket 400, and the cover fastening hole 305 of the case cover 300, and then be bolted with the fastening nut 630.

Meanwhile, the disposed locations of the fastening boss 610 and the fastening nut 630 of the fastening unit 600 are not limited thereto, and as long as the fastening boss 610 and the fastening nut 630 can be mutually coupled, it is also possible that the fastening boss 610 is provided to cover the cover fastening hole 305 of the case cover 300 on the outer side of the case cover 300, and the fastening nut 630 is provided to cover the tray fastening hole 205 of the case tray 200 on the inner side of the case tray 200.

**In** addition, the fastening unit 600 may be provided with a fastening bolt and a fastening nut bolted to the fastening bolt in addition to the fastening boss 610 and the fastening nut 630 coupled with the fastening boss 610.

The positions of the fastening bolt and the fastening nut may also be interchanged as long as they can guide mutual coupling between the case tray 200 and the case cover 300.

When the bolting is performed through the fastening unit 600, twisting may occur at the edge of the case cover 300 where the sealing gasket 400 is placed, in particular, at the bottom edge of the case cover 300, due to the pressing force resulting from the bolting.

In this embodiment, in the bottom edge portion of the case cover 300, since the first reinforcing plate 510 and the second reinforcing plate 530 of the reinforcing unit 500 are provided on the upper and lower sides of the bottom edge of the case cover 300 with the sealing gasket 400 interposed therebetween, it is possible to effectively prevent a twisting phenomenon that may occur at the bottom edge of the case cover 300 during the bolting.

Therefore, in this embodiment, since the case cover 300 and the case tray 200 may be coupled at the position where the sealing gasket 400 is placed without twisting the case cover 300, the surface pressure of the sealing gasket 400 may be secured as much as possible.

Accordingly, in this embodiment, since the surface pressure of the sealing gasket 400 may be further increased through the reinforcing unit 500, the sealing performance of the battery pack 10 may be effectively improved.

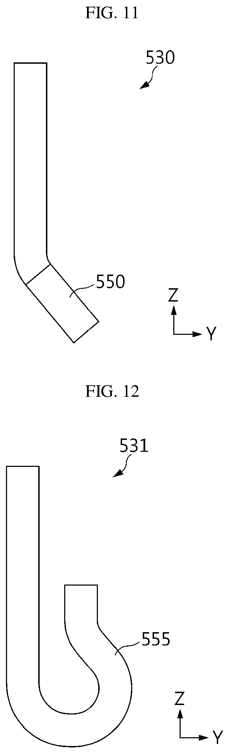

FIG. 11 is a cross-sectional view of a second reinforcing plate of the reinforcing unit of FIG. 4.

Referring to FIG. 11, a reinforcing patch 550 extending curvedly at a predetermined angle may be provided at one end of the second reinforcing plate 530. The reinforcing patch 550 is integrally formed with the second reinforcing plate 530, and when the bolting is performed, the reinforcing patch 550 increases the moment of inertia of the entire case cover 300 to more reliably prevent twisting of the bottom edge of the case cover 300.

FIG. 12 is a view for explaining a second reinforcing plate according to another embodiment of the present disclosure.

Since the second reinforcing plate 531 according to the present embodiment is similar to the second reinforcing plate 530 of the previous embodiment, redundant descriptions of components substantially the same as or similar to those of the previous embodiment will be omitted, and hereinafter, differences from the previous embodiment will be described.

Referring to FIG. 12, the reinforcing patch 555 of the second reinforcing plate 531 may have a hemming shape and be provided so that an end thereof is folded upward (+Z-axis direction). The reinforcing patch 555 may further increase the moment of inertia of the entire case cover 300.

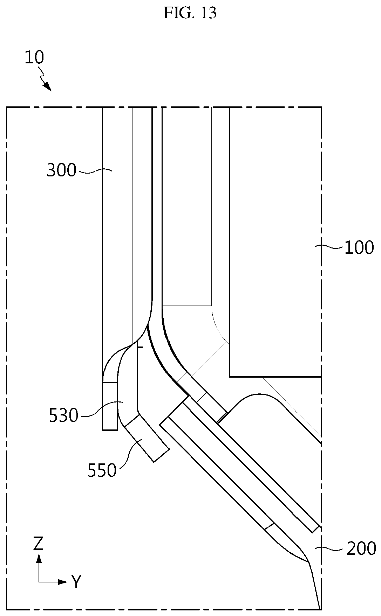

FIG. 13 is a view for explaining a structure for preventing direct penetration of moisture or foreign substance through a reinforcing patch of the second reinforcing plate of FIG. 11.

Referring to FIG. 13, the reinforcing patch 550 is formed on the lower end of the second reinforcing plate 530, and at least a part thereof may be exposed to the outside of the lower end of the case cover 300.

The reinforcing patch 550 may be disposed between the case cover 300 and the case tray 200 on the outer side of the case cover 300 to prevent moisture, foreign substances, and direct sunlight from directly penetrating the battery module 100 disposed inside the case tray 200.

In addition, the reinforcing patch 550 may prevent direct penetration of the moisture, foreign substance, and direct sunlight into the sealing gasket (400, see FIG. 2) in addition to the battery module 100.

Therefore, the reinforcing patch 550 may effectively prevent damage to the battery module 100 and the sealing gasket 400 due to the moisture, foreign substance, and direct sunlight.

**In** addition, even through the reinforcing patch (555, see FIG. 12) of the previous embodiment, it is possible to prevent direct penetration of the moisture, foreign substance, and direct sunlight into the battery module 100 and the sealing gasket 400 described above.

Meanwhile, although not shown, the battery module 100 may further include a bus bar assembly for sensing the voltage of the plurality of battery cells 150. The bus bar assembly is electrically connected to the battery cells 150 and may be electrically connected to an electric component such as a BMS described later.

The bus bar assembly is electrically connected to electrode leads of the battery cells 150, and may be provided on both sides of the battery cells 150 in the front and rear directions or in the top and bottom directions of the battery cells 150.

In addition, although not shown, the battery pack 10 may further include a BMS for controlling or managing the battery module 100, a heatsink for cooling the battery module 100, and other various electric components constituting the battery pack 10.

The heatsink is provided on the bottom or side of the battery module 100, and is connected to an external cooling device for cooling the battery pack 10, and may be provided in an air-cooled or water-cooled manner. The heatsink may include a cooling passage through which a cooling fluid flows.

In addition, the battery pack 10 may include components such as a service plug for managing the battery pack 10, and at least a part of the service plug may be provided to be exposed to the outside of the case tray 200 or the case cover 300 for easy follow-up management by a user or the like.

FIG. 14 is a view for describing a vehicle according to an embodiment of the present disclosure.

Referring to FIG. 14, the battery pack 10 may be provided in at least one or in plurality in a vehicle 1 as a fuel source of the vehicle. By way of example, the battery pack 10 may be included in an electric vehicle, a hybrid vehicle, and any other type of the vehicle 1 that may utilize the battery pack 10 as a fuel source.

In addition, the battery pack 10 may also be provided in other devices, instruments, and facilities, such as an energy storage system using a secondary battery, in addition to the vehicle 1. In particular, the energy storage system may be an energy storage system used for industrial purposes or a residential (building) energy storage system used to store energy in houses or buildings.

As described above, devices, instruments, and facilities having the battery pack 10 according to the present embodiment, such as the vehicle 1, include the battery pack 10 described above, and thus it is possible to implement devices, instruments, and facilities, such as the vehicle 1, having all advantages of the battery pack 10 described above.

According to various embodiments as described above, it is possible to provide a battery pack 10 capable of improving sealing performance of the sealing gasket 400 by preventing twisting of the case cover 300, and a vehicle 1 including the same.

In addition, according to various embodiments as described above, it is possible to provide a battery pack capable of effectively protecting the battery module 100 in the case cover 300 by preventing direct penetration of moisture, foreign substances, direct sunlight, etc. into the case cover 300, and a vehicle including the same.

While the present disclosure has been hereinabove described with regard to a limited number of embodiments and drawings, the present disclosure is not limited thereto and it is obvious to those skilled in the art that a variety of modifications and changes may be made thereto within the scope of the appended claims.

## Claims

1. A battery pack (10) comprising:
at least one battery module (100) including at least one battery cell (150);
a case tray (200) configured to support the at least one battery module (100);
a case cover (300) coupled with the case tray (200) to cover the at least one battery module (100);
a sealing gasket (400) disposed between the case tray (200) and the case cover (300) to prevent penetration of moisture or foreign substance into the at least one battery module (100); and
a reinforcing unit (500) provided to the case cover (300) to be disposed close to the sealing gasket (400) and configured to prevent twisting of the case cover (300) when the case tray (200) and the case cover (300) are coupled,
wherein the reinforcing unit (500) is disposed oppositely with the sealing gasket (400) interposed therebetween,
**characterized in that** the reinforcing unit (500) includes:
a first reinforcing plate (510) provided on an inner surface of the case cover (300); and
a second reinforcing plate (530) provided on the inner surface of the case cover (300) to be spaced apart from the first reinforcing plate (510) by a predetermined distance,
wherein the sealing gasket (400) is disposed between the first reinforcing plate (510) and the second reinforcing plate (530).

2. The battery pack (10) according to claim 1, wherein the case tray (200) and the case cover (300) are mutually coupled through a fastening unit (600),
wherein the fastening unit (600) penetrates the sealing gasket (400) when the case tray (200) and the case cover (300) are coupled.

3. The battery pack (10) according to claim 1, wherein the reinforcing unit (500) has a thickness corresponding to the thickness of the sealing gasket (400).

4. The battery pack (10) according to claim 1, wherein the sealing gasket (400) includes:
a gasket band (410) disposed between the first reinforcing plate (510) and the second reinforcing plate (530) when the case tray (200) and the case cover (300) are coupled; and
a plurality of fastening portions (430) formed on the gasket band (410) so that a fastening unit (600) for coupling the case tray (200) and the case cover (300) passes therethrough.

5. The battery pack (10) according to claim 4, wherein the plurality of fastening portions (430) are formed to protrude beyond the gasket band (410) in a width direction of the gasket band (410).

6. The battery pack (10) according to claim 4, wherein the second reinforcing plate (530) is provided with a plurality of concave portions (535) to prevent interference with the plurality of fastening portions (430).

7. The battery pack (10) according to claim 6, wherein the plurality of concave portions (535) are disposed on a lower side of the plurality of fastening portions (430) and are disposed opposite to each other to be spaced apart from the plurality of fastening portions (430) by a predetermined distance.

8. The battery pack (10) according to claim 1, wherein one end of the second reinforcing plate (530) is provided with a reinforcing patch (550) extending curvedly at a predetermined angle.

9. The battery pack (10) according to claim 8, wherein the reinforcing patch (550) is formed at a lower end of the second reinforcing plate (530), and at least a part thereof is exposed to the outside of the case cover (300).

10. A vehicle (1) comprising at least one battery pack (10) according to any one of claims 1 to 9.

## Patentansprüche

1. Batteriepack (10), umfassend:
wenigstens ein Batteriemodul (100), welches wenigstens eine Batteriezelle (150) umfasst;
eine Gehäuseablage (200), welche dazu eingerichtet ist, das wenigstens eine Batteriemodul (100) zu haltern;
eine Gehäuseabdeckung (300), welche mit der Gehäuseablage (200) gekoppelt ist, um das wenigstens eine Batteriemodul (100) abzudecken;
eine Dichtung (400), welche zwischen der Gehäuseablage (200) und der Gehäuseabdeckung (300) angeordnet ist, um ein Durchdringen von Feuchtigkeit oder einem Fremdkörper in das wenigstens eine Batteriemodul (100) zu verhindern; und
eine Verstärkungseinheit (500), welche an der Gehäuseabdeckung (300) bereitgestellt ist, um nahe an der Dichtung (400) angeordnet zu sein, und welche dazu eingerichtet ist, ein Verdrehen der Gehäuseabdeckung (300) zu verhindern, wenn die Gehäuseablage (200) und die Gehäuseabdeckung (300) gekoppelt sind,
wobei die Verstärkungseinheit (500) mit der Dichtung (400) dazwischen eingefügt gegenüberliegend angeordnet ist,
**dadurch gekennzeichnet, dass** die Verstärkungseinheit (500) umfasst:
eine erste Verstärkungsplatte (510), welche an einer inneren Fläche der Gehäuseabdeckung (300) bereitgestellt ist; und
eine zweite Verstärkungsplatte (530), welche an der inneren Fläche der Gehäuseabdeckung (300) bereitgestellt ist, um von der ersten Verstärkungsplatte (510) um einen vorbestimmten Abstand beabstandet zu sein,
wobei die Dichtung (400) zwischen der ersten Verstärkungsplatte (510) und der zweiten Verstärkungsplatte (530) angeordnet ist.

2. Batteriepack (10) nach Anspruch 1, wobei die Gehäuseablage (200) und die Gehäuseabdeckung (300) gemeinsam durch eine Befestigungseinheit (600) gekoppelt sind,
wobei die Befestigungseinheit (600) die Dichtung (400) durchdringt, wenn die Gehäuseablage (200) und die Gehäuseabdeckung (300) gekoppelt sind.

3. Batteriepack (10) nach Anspruch 1, wobei die Verstärkungseinheit (500) eine Dicke aufweist, welche der Dicke der Dichtung (400) entspricht.

4. Batteriepack (10) nach Anspruch 1, wobei die Dichtung (400) umfasst:
ein Dichtungsband (410), welches zwischen der ersten Verstärkungsplatte (510) und der zweiten Verstärkungsplatte (530) angeordnet ist, wenn die Gehäuseablage (200) und die Gehäuseabdeckung (300) gekoppelt sind; und
eine Mehrzahl von Befestigungsabschnitten (430), welche an dem Dichtungsband (410) gebildet sind, so dass eine Befestigungseinheit (600) zum Koppeln der Gehäuseablage (200) und der Gehäuseabdeckung (300) dadurch verläuft.

5. Batteriepack (10) nach Anspruch 4, wobei die Mehrzahl von Befestigungsabschnitten (430) gebildet sind, um in einer Breitenrichtung des Dichtungsbands (410) über das Dichtungsband (410) hervorzustehen.

6. Batteriepack (10) nach Anspruch 4, wobei die zweite Verstärkungsplatte (530) mit einer Mehrzahl konkaver Abschnitte (535) bereitgestellt ist, um eine Beeinträchtigung der Mehrzahl von Befestigungsabschnitten (430) zu verhindern.

7. Batteriepack (10) nach Anspruch 6, wobei die Mehrzahl konkaver Abschnitte (535) an einer unteren Seite der Mehrzahl von Befestigungsabschnitten (430) angeordnet ist und entgegengesetzt zueinander angeordnet ist, um von der Mehrzahl von Befestigungsabschnitten (430) um einen vorbestimmten Abstand beabstandet zu sein.

8. Batteriepack (10) nach Anspruch 1, wobei ein Ende der zweiten Verstärkungsplatte (530) mit einer Verstärkungsstelle (550) bereitgestellt ist, welche sich mit einem vorbestimmten Winkel gekrümmt erstreckt.

9. Batteriepack (10) nach Anspruch 8, wobei die Verstärkungsstelle (550) an einem unteren Ende der zweiten Verstärkungsplatte (530) gebildet ist, und wobei wenigstens ein Teil davon zu der Außenseite der Gehäuseabdeckung (300) exponiert ist.

10. Fahrzeug (1), umfassend wenigstens einen Batteriepack (10) nach einem der Ansprüche 1 bis 9.

## Revendications

1. Bloc-batterie (10) comprenant :
au moins un module de batterie (100) comportant au moins un élément de batterie (150) ;
un plateau de boîtier (200) configuré pour porter l'au moins un module de batterie (100) ;
un couvercle de boîtier (300) couplé au plateau de boîtier (200) pour recouvrir l'au moins un module de batterie (100) ;
un joint d'étanchéité (400) disposé entre le plateau de boîtier (200) et le couvercle de boîtier (300) pour empêcher la pénétration d'humidité ou de substances étrangères dans l'au moins un module de batterie (100) ; et
une unité de renfort (500) ménagée sur le couvercle de boîtier (300) pour être disposée près du joint d'étanchéité (400) et configurée pour empêcher la torsion du couvercle de boîtier (300) lorsque le plateau de boîtier (200) et le couvercle de boîtier (300) sont couplés,
dans lequel l'unité de renfort (500) est disposée de manière opposée avec le joint d'étanchéité (400) interposé entre elles,
**caractérisé en ce que** l'unité de renfort (500) comporte :
une première plaque de renfort (510) ménagée sur une surface interne du couvercle de boîtier (300) ; et
une seconde plaque de renfort (530) ménagée sur la surface interne du couvercle de boîtier (300) pour être espacée de la première plaque de renfort (510) d'une distance prédéterminée,
dans lequel le joint d'étanchéité (400) est disposé entre la première plaque de renfort (510) et la seconde plaque de renfort (530).

2. Bloc-batterie (10) selon la revendication 1, dans lequel le plateau de boîtier (200) et le couvercle de boîtier (300) sont mutuellement couplés par le biais d'une unité de fixation (600),
dans lequel l'unité de fixation (600) pénètre dans le joint d'étanchéité (400) lorsque le plateau de boîtier (200) et le couvercle de boîtier (300) sont couplés.

3. Bloc-batterie (10) selon la revendication 1, dans lequel l'unité de renfort (500) possède une épaisseur correspondant à l'épaisseur du joint d'étanchéité (400).

4. Bloc-batterie (10) selon la revendication 1, dans lequel le joint d'étanchéité (400) comporte :
une bande de joint (410) disposée entre la première plaque de renfort (510) et la seconde plaque de renfort (530) lorsque le plateau de boîtier (200) et le couvercle de boîtier (300) sont couplés ; et
une pluralité de portions de fixation (430) formées sur la bande de joint (410) de telle sorte qu'une unité de fixation (600) pour le couplage du plateau de boîtier (200) et du couvercle de boîtier (300) passe à travers celles-ci.

5. Bloc-batterie (10) selon la revendication 4, dans lequel la pluralité de portions de fixation (430) sont formées pour faire saillie au-delà de la bande de joint (410) dans une direction de largeur de la bande de joint (410).

6. Bloc-batterie (10) selon la revendication 4, dans lequel la seconde plaque de renfort (530) est munie d'une pluralité de portions concaves (535) pour empêcher une interférence avec la pluralité de portions de fixation (430).

7. Bloc-batterie (10) selon la revendication 6, dans lequel la pluralité de portions concaves (535) sont disposées sur un côté inférieur de la pluralité de portions de fixation (430) et sont disposées à l'opposé les unes des autres pour être espacées de la pluralité de portions de fixation (430) d'une distance prédéterminée.

8. Bloc-batterie (10) selon la revendication 1, dans lequel une extrémité de la seconde plaque de renfort (530) est munie d'une pièce de renfort (550) s'étendant de manière incurvée selon un angle prédéterminé.

9. Bloc-batterie (10) selon la revendication 8, dans lequel la pièce de renfort (550) est formée à une extrémité inférieure de la seconde plaque de renfort (530), et au moins une partie de celle-ci est exposée à l'extérieur du couvercle de boîtier (300).

10. Véhicule (1) comprenant au moins un bloc-batterie (10) selon l'une quelconque des revendications 1 à 9.
